# EUROPEAN PATENT SPECIFICATION

(11) **EP 3 786 867 B1**
(45) Date of publication and mention of the grant of the patent: **27.05.2026**
(21) Application number: 19194797.7
(22) Date of filing: 30.08.2019
(51) Int. Cl.: G06Q 20/02, G06Q 20/40

(54) **TRANSACTION SYSTEM MANAGEMENT**
TRANSAKTIONSSYSTEMVERWALTUNG
GESTION DE SYSTÈME DE TRANSACTIONS

(43) Date of publication of application: 03.03.2021
(73) Proprietor: Mastercard International Incorporated, Purchase NY 10577 (US)
(72) Inventor: DA SILVA, Luis Filipe Ferreira, 1150 Brussels (BE)
(74) Representative: Richardson, Mark Jonathan

(56) References cited:
- US-A1- 2014 180 925

## Description

### TECHNICAL FIELD

The present disclosure relates to transaction system management, and particularly to a computer-implemented method, and a transaction server, for management of a transaction within a network.

### BACKGROUND

Card switching networks operating in dual-message topology involve two message flows: a first flow for real-time authorisation and a second flow for the clearing presentment. An advantage of dual-message transactions which is reflected in the separation of the two message flows is that they are in turn able to support both so-called 'final transactions' and 'pre-authorised transactions'. Contrastingly, card switching networks operating in single-message topology are generally only able to efficiently support final transactions. Card switching networks operating in single-message topology can and do use certain techniques for handling pre-authorised transactions where the final transaction confirmation and amount are known in a matter of minutes (such as those involving automated fuel dispensers), but such techniques have strong limitations and are often not used for pre-authorised transactions where the final transaction confirmation and amount are known only after multiple days (such as those involving hotels, car rentals, and e-commerce purchases).

In final transactions, the final transaction amount is known with certainty at the time of authorisation. In contrast, in pre-authorised transactions, the final transaction amount is not known with certainty at the time of authorisation, or it is unclear at the time of authorisation whether or not the transaction will be completed.

Card switching networks operating in dual message topology for final transactions can lead to delays in transaction processing by the card issuer, notably by leading the card issuer to wait for the finalisation of the clearing process - which often happens one or more days after the transaction - before posting the transaction on the cardholder's account. This is because when the card issuer receives and approves the authorisation request message, the card issuer is unable to determine with certainty: (i) if the clearing presentment is going to contain the same cardholder billing amount or a different one, or (ii) if the clearing presentment is even going to be made. US 2014/180925 A1, discloses a method for managing transactions that focuses on "Delayed Settlement Transactions" to reduce transaction fees by deferring settlement for a specific period. In this system, after an authorisation phase, a merchant or acquirer transmits a clearing record containing a "deferred settlement indicator" to the payment processing organisation. This indicator notifies the issuer that the settlement of the transaction is to be postponed for a predetermined amount of time rather than occurring promptly.

It is an object of the present disclosure to provide an improved transaction processing system.

The present disclosure has been devised to mitigate or overcome at least some of the above-mentioned problems.

### SUMMARY OF THE DISCLOSURE

According to a first aspect of the present disclosure, there is provided a computer-implemented method as defined in claim 1.

In the present disclosure a transaction occurs between a first entity (e.g. an acquirer), a second entity (e.g. an issuer) and a transaction server (e.g. a central switch or card switching network). The transaction may occur at a merchant which is associated with the first entity and may be undertaken by a cardholder who is associated with the second entity.

The clearing phase may be configured to allow the second entity to post the transaction to the cardholder's account and the computer-implemented method according to the present disclosure facilitates the generation of the clearing request message without waiting for a separate clearing request message from the second entity.

The clearing request message may be submitted to a clearing system at the transaction server or to a clearing system that is part of the transaction server such that a clearing process may be carried out by the clearing system. Subsequently, the transaction server may output a clearing request confirmation message. The clearing request confirmation message may comprise transaction data.

The transaction is associated with a transaction indicator by virtue of the transaction indicator being contained within the authorisation request message or the authorisation request response message. The transaction indicator may take the form of a flag, such as a final transaction indicator (FTI) as described below, in the data structure of the authorisation request message or the authorisation request response message.

In some configurations, analysing the received authorisation request response message may further comprise determining if the received authorisation request response message contains the transaction indicator and wherein in the event that the received authorisation request response message contains the approval indicator and the transaction indicator, the transaction server may generate and submit a clearing request message on behalf of the first entity to enable the clearing phase to be performed.

In some configurations, the computer-implemented method may further comprise analysing the received authorisation request message to determine if the received authorisation request message contains the transaction indicator and wherein in the event that the received authorisation request message contains the transaction indicator and the received authorisation request response message contains the approval indicator, the transaction server may generate and submit a clearing request message on behalf of the first entity to enable the clearing phase to be performed.

The method may further comprise: adding transaction-related data to the authorisation request message to form an enhanced authorisation request message; and sending the enhanced authorisation request message to the second entity.

The transaction-related data may comprise one or more of: interchange-related information, information about the clearing cycle in which the transaction will be cleared, and information about the settlement service which will be used to settle the transaction.

The method may further comprise generating the clearing request message within a pre-specified time frame.

The method may further comprise generating and adding additional information for use in generation of the clearing request message

The additional information may comprise the identification of the interchange rate to be applied when such information is not provided by the first entity.

In the event the received authorisation request response message contains the approval indicator and no transaction indicator, the transaction server may wait until a clearing request message is received from the first entity such that the clearing phase to be performed.

The method may further comprise monitoring an incoming clearing request message from the first entity; and blocking the incoming clearing request message from the first entity in the event that the transaction server has already generated a clearing request message (or vice-versa).

The incoming clearing request message from the first entity may be blocked in this case such that duplicate submission of the clearing request message to the second entity is avoided. If an incoming clearing request message is received by the server before the server has generated a clearing request message, the method may comprise preventing a clearing request message from being generated by the server. According to a second aspect of the present disclosure, there is provided a transaction server as defined in claim 10.

According to a third aspect of the present disclosure, there is provided a computer program product comprising instructions which, when the program is executed by a computer, cause the computer to carry out the method of the first aspect of the present disclosure as outlined above.

According to a fourth aspect of the present disclosure, there is provided a computer-readable storage medium comprising instructions which, when executed by a computer, cause the computer to carry out the method of the first aspect of the present disclosure as described above.

### BRIEF DESCRIPTION OF THE DRAWINGS

One or more embodiments of the disclosure will now be described, by way of example only, with reference to the accompanying drawings, in which:
Figure 1 is a sequence diagram showing process steps in a dual-message payment transaction between entities operating in a card scheme;
Figure 2 is a sequence diagram showing process steps in a single-message payment transaction between entities operating in a card scheme;
Figure 3 is a block diagram showing a transaction server for management of a transaction within a network, in accordance with an embodiment of the present disclosure;
Figure 4 is a sequence diagram showing process steps of a computer-implemented method for management of a transaction within a network, in accordance with an embodiment of the present disclosure; and
Figure 5 is a schematic diagram showing a typical four-party model used in payment interactions between entities operating in a card scheme.

### DETAILED DESCRIPTION

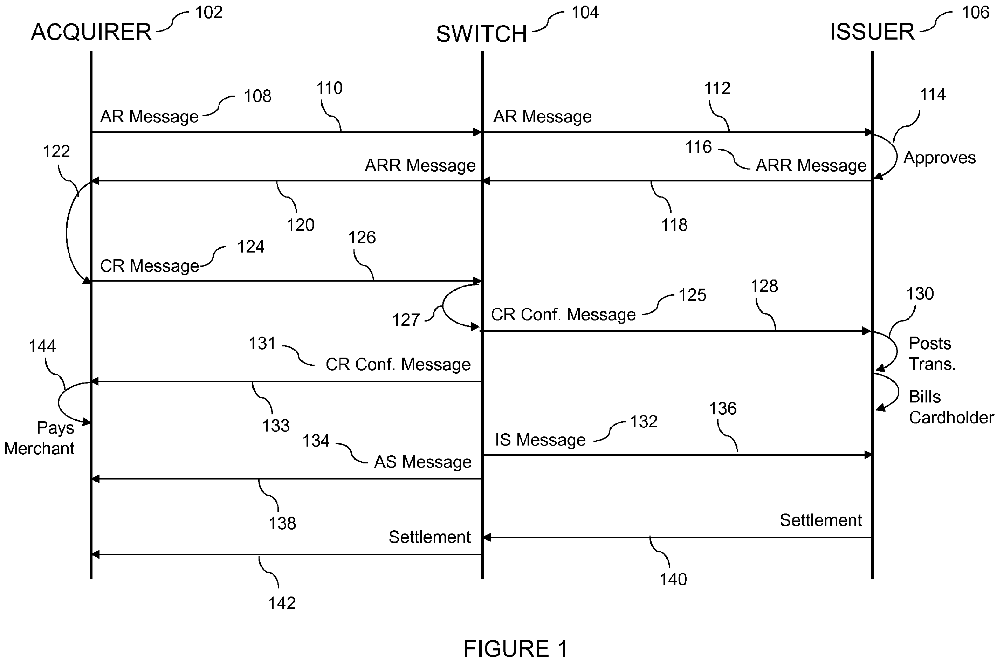

General and specific embodiments of the disclosure will be described below with reference to Figures 1 to 5.

Normally, card schemes - payment networks linked to payment cards - are based on one of two models: a three-party model or a four-party model (adopted by Mastercard, Visa, and others). For the purposes of the present disclosure, the four-party model is described as follows.

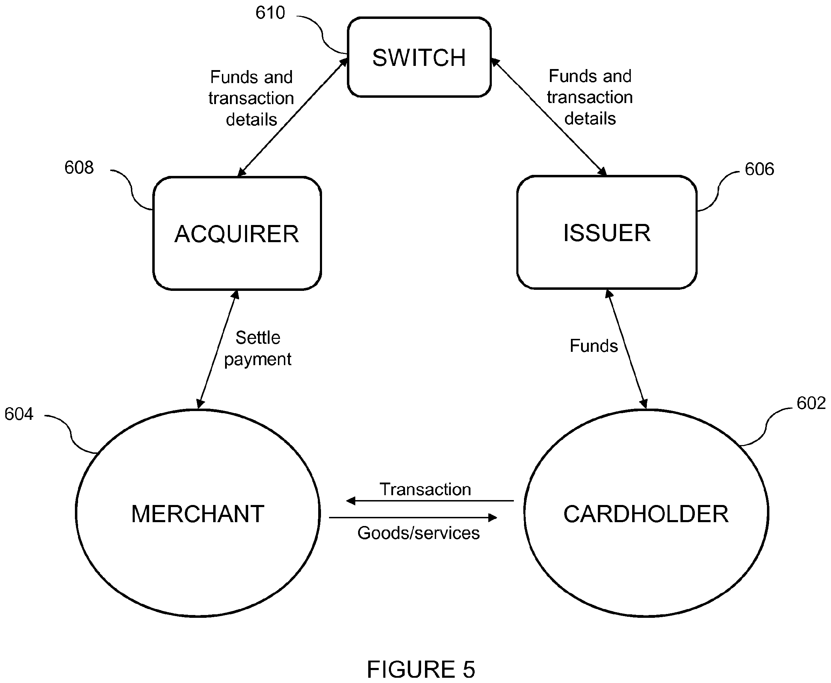

As shown in Figure 5, the four-party model comprises four entity types: cardholder 602, merchant 604, issuer 606 and acquirer 608. In this model, the cardholder 602 purchases goods or services from the merchant 604. The issuer 606 is the bank or any other financial institution that issued the card to the cardholder 602. The acquirer 608 provides services for card processing to the merchant 604. The model further comprises a central switch 610, and interactions between the issuer 606 and the acquirer 608 are routed via the switch 610. It should be understood that the four-party model is not limited to the use of payment cards as transaction devices, and can be used with other transaction devices, such as mobile devices or smart watches. A typical four-party model used in payment interactions between entities operating in a card scheme is discussed in further detail, after general and specific embodiments of the disclosure are described, with reference to Figure 5.

In certain transaction types, other arrangements are possible - for example, for transactions in which the issuer and the acquirer are the same entity, routing of the transaction between the issuer and the acquirer is not required. Furthermore, it is also possible for the authorisation details and the clearing details to be sent as part of the same message. Such a transaction is often referred to as a 'single-message' transaction since only one message is used to communicate authorisation and clearing details.

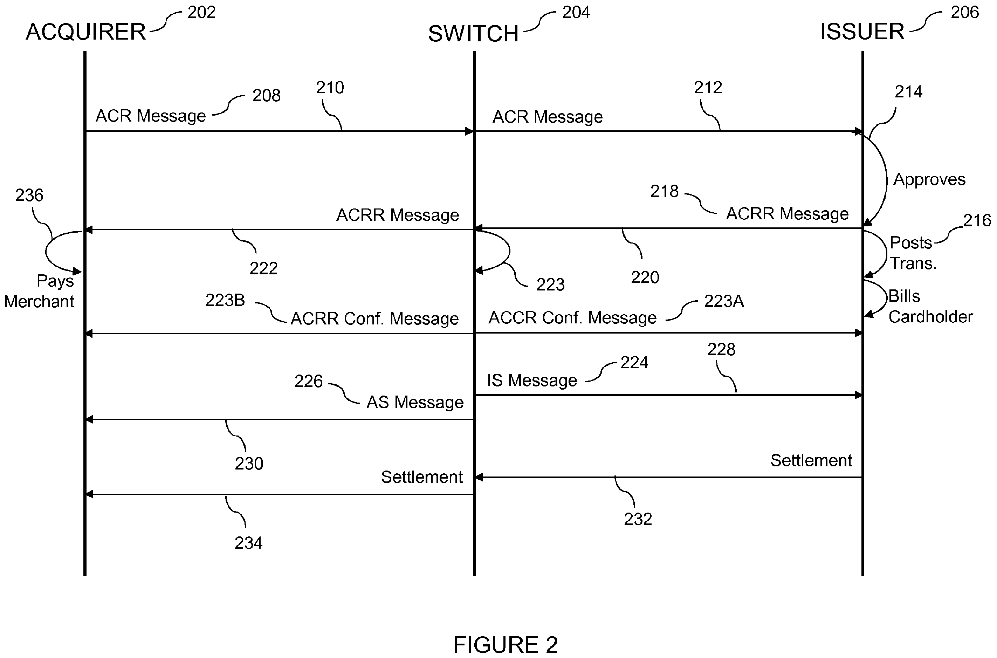

Typical dual-message and single-message transactions are outlined in further detail below with reference to Figure 1 and Figure 2, respectively.

### DUAL-MESSAGE PAYMENT TRANSACTION

A dual-message payment transaction between entities operating in a card scheme is shown in Figure 1. The entities shown in Figure 1 - namely, acquirer 102, switch 104, and issuer 106 - operate in a card scheme in line with the four-party transaction model as described above.

### Authorisation

Barring for exceptional cases where real-time communications are not available or practical (e.g., purchases done in airplanes or ships), the authorisation of a transaction takes places at the time of purchase of goods or services by a cardholder associated with the issuer 106 (cardholder not shown) from a merchant associated with the acquirer 102 (merchant not shown). Once a transaction has been initiated by a cardholder and the merchant has provided the necessary transaction details to the acquirer 102, the acquirer 102 generates an authorisation request (AR) message 108. The AR message 108 comprises details of the transaction and of the payment card used by the cardholder to make the purchase. At Step 110, the acquirer 102 sends the AR message 108 to the switch 104. An authorisation system at the switch 104 checks and validates certain aspects of the AR message 108 and, as the case may be, adds additional data elements to the AR message 108. At Step 112, the switch 104 then sends the validated, and possibly enriched, AR message 108 onto the issuer 106 to seek approval of the transaction.

Subsequently, at Step 114, the issuer 106 generates a response to the authorisation request contained within the AR message 108. In a summarised way, the response may be to: (i) approve the request, whereby the transaction is authorised for processing; or (ii) decline the request, whereby the merchant is not allowed to complete the transaction. Alternative responses also exist, such as a request for the merchant to refer to the issuer for further instructions or to capture the card. Also, in the case of an approval, the approval may be for the full amount or for a partial amount. Following the decision of the issuer 106 to approve or decline, the issuer 106 then generates an authorisation request response (ARR) message 116, which includes a code that reflects the issuer's decision. Figure 1 illustrates the case where the issuer decision at Step 114 is to approve the AR message 108. At Step 118, the ARR message is sent to the switch 104, and, at Step 120, the ARR message is sent onto the acquirer 102 and subsequently onto the merchant. The cardholder then completes the purchase and receives a receipt from the merchant.

### Clearing

Clearing is the process of exchanging financial transaction data between the acquirer 102 and the issuer 106 and marks the final confirmation of the transaction details. Clearing usually occurs within 48 hours of a purchase being made. The switch clearing system may operate in some days and not others (e.g., the clearing system may be closed on Sundays), which may add additional delays.

After receiving all the necessary information from the merchant (which sometimes is received in real-time together with the information that the acquirer 102 receives from the merchant to generate the AR message 108 and in other times is received several hours or days after the AR message as shown in Step 122 in Figure 1), the acquirer 102 generates a clearing request (CR) message 124, wherein the CR message comprises the transaction data received from the merchant and signifies the transaction has been completed at the merchant point of service. At Step 126, the acquirer 102 sends the CR message 124 to the switch. The CR message 124 is also often referred to as the clearing presentment. It should be understood that the acquirer 102 often generates multiple CR messages for multiple different transactions involving multiple different issuers and sends them simultaneously to the switch for processing. Next, during the next available clearing cycle, at Step 127, the clearing system at the switch 104 clears the transaction. This includes validating the transaction data contained within the CR message 124 and conducting other processing tasks typical of clearing. At Step 128, the switch 104 sends a CR confirmation message 125 to the issuer 106. It should be understood that the switch may simultaneously send to the issuer 106 multiple CR confirmation messages (as a batch of CR confirmation messages) that have been submitted to the clearing system at the switch by multiple acquirers for multiple different transactions. However, for the purpose of clarity, in the present example at Step 128 the switch 104 sends a single CR confirmation message 125 to the issuer 106. Subsequently, at Step 130, the issuer 106 posts the transaction contained within the CR confirmation message 125 to the cardholder's account. By posting the transaction to the cardholder's account, the issuer 106 bills the cardholder for the purchase. After the clearing system at the switch has validated the transaction data contained within the CR message 124, the switch 104 also sends a CR confirmation message 131 to the acquirer 102, at Step 133. This CR confirmation message 131 informs the acquirer 102 that the transaction has been successfully cleared. The acquirer 102 typically pays the merchant, at Step 144, after receiving the CR confirmation message 131, although some acquirers may choose to pay the merchant before receipt of the CR confirmation message 131.

### Settlement

Settlement is the process of exchanging funds between the acquirer 102 and the issuer 106 for a transaction, and usually occurs within 1 or 2 days after the clearing. A settlement system at the switch 104 initiates the exchange of funds by generating an issuer settlement (IS) advice message 132 and an acquirer settlement (AS) advice message 134, for the issuer 106 and the acquirer 102 respectively, to communicate the total amount to be exchanged and to instruct the issuer and the acquirer to partake in the settlement of funds. At Step 136, the settlement system at the switch 104 sends the IS message 132 to the issuer 106, and at Step 138, the settlement system at the switch 104 sends the AS message 134 to the acquirer 102. Next, at Step 140, the issuer 106 settles payment to the settlement system at the switch 104. The settlement system then, at Step 142, routes the payment to the acquirer 102.

It should be understood that the above process is idealised for a single transaction for the purpose of clarity. Therefore, in the above example, Steps 140 and 142 relate to settlements of a single transaction between the issuer and the acquirer. In reality, the settlement system of the switch may determine a "net" transfer of funds based on hundreds or thousands of transactions occurring between the issuer and the acquirer. In addition, it should also be understood that the above process is idealised for a transaction that corresponds to a payment for a purchase of goods and services, which is the most frequent type of card transaction and where the movement of funds in settlement flows from the issuer to the acquirer. However, it is important to note that card processing systems also process types of transactions (such as merchandise returns, chargebacks, and money transfers) where the movement of funds in settlement flows from the acquirer to the issuer. In turn, this means that once all the transactions have been taken into account, Steps 140 and 142, for some acquirers and for some issuers, could relate to a net movement of funds from the acquirer to the issuer, rather than from the issuer to the acquirer as shown by the direction of the arrows in Figure 1.

### SINGLE-MESSAGE PAYMENT TRANSACTION

Turning to Figure 2, a single-message payment transaction between entities operating in a card scheme is shown. The entities shown in Figure 2 - namely, acquirer 202, switch 204, and issuer 206 - operate in a card scheme in line with the four-party transaction model (described with reference to Figure 5 below).

In a single-message payment transaction, the authorisation and clearing requests are generated and submitted as part of the same message. In Figure 2, this combined message is referred to as an authorisation and clearing request (ACR) message 208. Transactions are entered directly into the clearing process after the authorisation has been approved by the issuer 206. A single-message payment transaction is described with reference to Figure 2 in further detail below.

### Authorisation

Barring for exceptional cases where real-time communications are not available or practical (e.g., purchases done in airplanes or ships), the authorisation and clearing of a transaction takes places at the time of purchase of goods or services by a cardholder associated with the issuer 206 (cardholder not shown) from a merchant associated with the acquirer 202 (merchant not shown). Once a transaction has been initiated by a cardholder and the merchant has provided the necessary transaction details to the acquirer 202, the acquirer 202 generates an authorisation and clearing request (ACR) message 208. The ACR message 208 comprises information required for authorisation of the transaction; namely, transaction amount and details of the payment card used by the cardholder to make the purchase and these details are considered to be final. At Step 210, the acquirer 202 sends the ACR message 208 to the switch 204. An authorisation system at the switch 204 checks and validates certain aspects of the ACR message 208 and, as the case may be, adds additional data elements to the ACR message 208. At Step 212, the switch 204 then sends the validated, and possibly enriched, ACR message 208 onto the issuer 206 to seek approval of the transaction.

At Step 214, the issuer 206 generates a response to the authorisation request contained within the ACR message 208. In a summarised way, the response may be to: (i) approve the request, whereby the transaction is authorised for processing; or (ii) decline the request, whereby the merchant is not allowed to complete the transaction. Alternative responses also exist, such as a request for the merchant to refer to the issuer for further instructions or to capture the card. Also, in the case of an approval, the approval may be for the full amount or for a partial amount. Following the decision of the issuer 206 to approve or decline, the issuer 206, at Step 216, posts the transaction contained within the ACR message 208 to the container's account. By posting the transaction to the cardholder's account, the issuer 206 bills the cardholder for the purchase.

### Clearing

The issuer 206 then generates an authorisation and clearing request response (ACRR) message 218. At Step 220, the ACRR message 218 is sent to the switch 204. At Step 222, the ACRR message is sent onto the acquirer 202 and subsequently onto the merchant. The acquirer 202 typically pays the merchant, at Step 236, after receiving the ACRR message 218, although some acquirers may choose to pay the merchant before receipt of the ACRR message 218. The cardholder then completes the purchase and receives a receipt from the merchant.

After Step 220, during the next available clearing cycle, at Step 223, the clearing system at the switch 204 clears the transaction, without further intervention from the acquirer 202. This includes validating the transaction data contained within the ACRR message 218 and performing other processing tasks typical of clearing.

After the clearing system at the switch 204 has cleared the transaction data contained within the ACCR message 218, the switch 204 sends an ACCR confirmation message 223A to the acquirer 202 and an ACCR confirmation message 223B to the issuer 206, to inform both that the transaction cleared successfully. It should be understood that the switch may simultaneously send to the acquirer 202 multiple ACCR confirmation messages (as a batch of ACCR confirmation messages) that relate to ACR messages submitted to the switch by the acquirer for multiple issuers for multiple different transactions and that the switch may simultaneously send to the issuer 206 multiple ACCR confirmation messages (as a batch of ACCR confirmation messages) that relate to ACR messages submitted to the switch by multiple acquirers for multiple different transactions. However, for the purpose of clarity, in the present example the switch 204 sends a single ACCR confirmation message 223A to the acquirer 202 and a single ACCR confirmation message 223B to the issuer 206.

### Settlement

The settlement process in a single-message payment transaction is analogous to that of a dual-message payment transaction. For completeness, the settlement process of the single-message transaction described with reference to Figure 2 is as follows. A settlement system at the switch 204 initiates the exchange of funds by generating an issuer settlement (IS) advice message 224 and an acquirer settlement (AS) advice message 226, for the issuer 206 and the acquirer 202 respectively, to communicate the total amount to be exchanged and to instruct the issuer and the acquirer to partake in the settlement of funds. At Step 228, the settlement system at the switch 204 sends the IS message 224 to the issuer 206, and at Step 230, the settlement system at the switch 204 sends the AS message 226 to the acquirer 202. Next, at Step 232, the issuer 206 settles payment to the settlement system at the switch 204. The settlement system then, at Step 234, routes the payment to the acquirer 202.

### ADVANTAGES AND DRAWBACKS OF TYPICAL DUAL-MESSAGE TOPOLOGY

Card switching networks operating in dual-message topology, as described above with reference to Figure 1, involve two message flows: a first flow for real-time authorisation and a second flow for the clearing presentment. An advantage of dual-message transactions which is reflected in the separation of the two message flows is that they are in turn able to support both so-called 'final transactions' and 'pre-authorised transactions'. Contrastingly, card switching networks operating in single-message topology, as described above with reference to Figure 2, are generally only able to efficiently support final transactions. Card switching networks operating in single-message topology can and do use certain techniques for handling pre-authorised transactions where the final transaction confirmation and amount are known in a matter of minutes (such as those involving automated fuel dispensers), but such techniques have strong limitations and are often not used for pre-authorised transactions where the final transaction confirmation and amount are known only after multiple days (such as those involving hotels, car rentals, and e-commerce purchases).

In final transactions, the final transaction amount is known with certainty at the time of authorisation. In contrast, in pre-authorised transactions, the final transaction amount is not known with certainty at the time of authorisation, or it is unclear at the time of authorisation whether or not the transaction will be completed or not. In pre-authorised transactions, the card issuer provisionally blocks funds from the cardholder account when it approves an authorisation request. The issuer then waits for the clearing presentment to post the transaction as final to the cardholder's account. At this stage, the final transaction amount to be posted corresponds to the cardholder billing amount that is included in the clearing presentment (which may be different from the one included in the approved authorisation request). If the clearing record does not arrive after a threshold period, e.g. thirty days, then the card issuer deletes the provisional posting under the assumption that the transaction did not complete.

However, card switching networks operating in dual message topology present an important drawback in processing final transactions. This drawback is that the card issuer cannot post transactions as final in the cardholder's account immediately after approving the authorisation because the card issuer is unable to determine: (i) if the clearing presentment is going to contain the same cardholder billing amount or a different one, or (ii) if the clearing presentment is even going to be made.

### GENERAL METHOD FOR MANAGEMENT OF A TRANSACTION

The present disclosure describes computer-implemented methods for management of a transaction within a network by a transaction server.

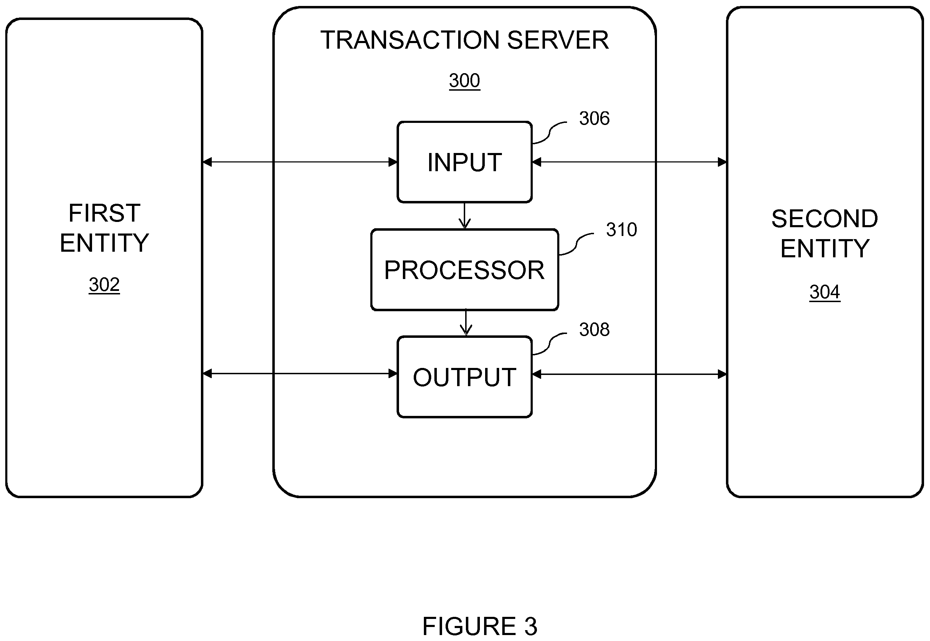

Figure 3 shows a transaction server (300) for management of a transaction within a network, in accordance with an embodiment of the present disclosure.

The network comprises a first entity 302, the transaction server 300 and a second entity 304. The transaction takes place at the first entity 302. The management of the transaction comprises an authorisation phase in which the second entity 304 determines if the transaction is to be approved, and a clearing phase in which, if the transaction has been approved, transaction data is exchanged between the first entity 302 and the second entity 304.

The transaction server 300 comprises an input 306 arranged to receive an authorisation request message from the first entity 302 and an authorisation request response message from the second entity 304. The transaction server 300 further comprises an output 308 arranged to send the authorisation request message to the second entity 304.

The transaction server 300 further comprises a processor 310 arranged to analyse the received authorisation request response message to determine if the received authorisation request response message contains an approval indicator, the approval indicator indicating that the second entity 304 approves the transaction.

In the event that the received authorisation request response message contains the approval indicator and the transaction is associated with a transaction indicator, the transaction indicator indicating that the clearing phase can be performed, the processor 310 is arranged to generate a clearing request message for submitting transaction data to the second entity 304 to enable the clearing phase to be performed.

### MANAGEMENT OF A DUAL-MESSAGE PAYMENT TRANSACTION

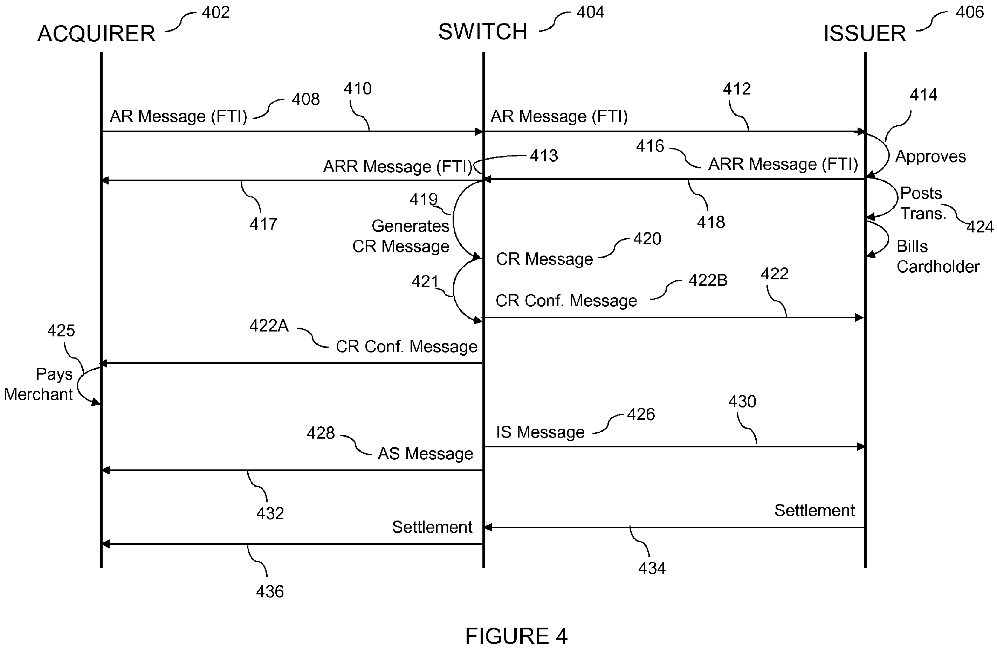

Figure 4 is a sequence diagram showing process steps in a dual-message payment transaction between entities operating in a card scheme, in accordance with a further embodiment of the present disclosure. The entities shown in Figure 4 - namely, acquirer 402, switch 404, and issuer 406 - operate in a card scheme in line with the four-party transaction model as described with reference to Figure 5 below.

### Authorisation

Barring for exceptional cases where real-time communications are not available or practical (e.g., purchases done in airplanes or ships), the authorisation of a transaction takes places at the time of purchase of goods or services by a cardholder associated with the issuer 406 (cardholder not shown) from a merchant associated with the acquirer 402 (merchant not shown). Once a transaction has been initiated by a cardholder, the acquirer 402 generates an authorisation request (AR) message 408. The AR message 408 contains a transaction indicator/flag, referred to herein as a final transaction indicator (FTI). Within Figure 4, the AR message is referenced as AR Message (FTI) 408 to distinguish it from the AR message exchange described in relation to Figures 1 and 2. The FTI is a data element within the AR message which provides an indication that the acquirer 402 authorises the transaction to take place as a final transaction, namely that the transaction is confirmed to take place and that the transaction amount is known (i.e. not a pre-authorised transaction). The FTI also provides an instruction to the switch 404 to generate the CR message on the behalf of the acquirer, as discussed in further detail below. The AR message (FTI) 408 further comprises details of the transaction and of the payment card used by the cardholder to make the purchase.

In some arrangements of the present disclosure, the acquirer 402 may indicate in the AR message (FTI) additional information for use in the preparation of the CR message, or clearing presentment, by the switch 404, as discussed in further detail below.

In some other arrangements of the present disclosure, the switch and the acquirer may agree that the FTI is not even needed and that such types of transactions (e.g., ATM cash disbursement) should be processed as if the FTI was present.

An example of an authorisation request (AR) message which contains a flag, referred to herein as a final transaction indicator (FTI) - referenced as AR message (FTI) in Figure 4 - is provided in the table below. Other typical data elements comprised within an AR message are also shown in the table. By way of example only, respective values for each of the data elements are listed as part of the table to indicate the structure of the AR message (FTI).

| **Data Element** | **Value** |
|---|---|
| Primary Account Number (PAN) | XXXXXXXXXXXX0040 |
| Processing Code | 00 (Debit for Goods and Services) |
| Amount, Transaction | 150,00 |
| Currency Code, Transaction | 978 (EUR) |
| Merchant Type | 5999 (MISCELLANEOUS AND SPECIALTY RETAIL STORES) |
| Card Acceptor Name | Best Shoes |
| Point-of-Service (POS) Entry Mode | 051 (PAN auto-entry via chip; Terminal has PIN entry capability) |
| Final Authorization Indicator | 1 (Final Authorization) |
| Acquiring Institution ID Code | 12345 |
| Card Acceptor ID Code | 0040941100301 |
| Transmission Date and Time | 08/06 10h57m25s |
| System Trace Audit Number (STAN) | 002543 |

Returning to Figure 4, at Step 410, the acquirer 402 sends the AR message (FTI) 408 to the switch 404. An authorisation system at the switch 404 checks and validates certain aspects of the AR message (FTI) and, as the case may be, adds additional data elements to the AR message (FTI) 408.

The switch 404 may add transaction-related data to the AR message (FTI) to form an enhanced AR message (FTI) for sending onto the issuer 406. The switch 404 may add information related to timescales in which the clearing and settlement processes are to be carried out. For example, the switch 404 may append additional clearing-oriented and/or settlement-oriented information to the AR message (FTI). Additional clearing-oriented information could include, for example, interchange-related information, or information about the clearing cycle in which the transaction will be cleared. Additional settlement-oriented information could include, for example, information about the settlement service which will be used to settle the transaction.

At Step 412, the switch 404 then sends the validated, and possibly enriched, AR message (FTI) 408 onto the issuer 406 to seek approval of the transaction. Subsequently, at Step 414, the issuer 406 generates a response to the authorisation request contained within the AR message (FTI) 408. In a summarised way, the response may be to: (i) fully approve the request, whereby the transaction is authorised for processing; (ii) partially approve the request, whereby the transaction is partially authorised for processing; or (ii) decline the request, whereby the merchant is not allowed to complete the transaction. Alternative responses also exist, such as a request for the merchant to refer to the issuer for further instructions or to capture the card. Also, in the case of an approval, the approval may be for the full amount or for a partial amount. Following the decision of the issuer 406 to approve or decline, the issuer 406 then generates an authorisation request response (ARR) message (FTI) 416, which includes a code that reflects the issuer's decision, and which also comprises the FTI flag, based on the response of the issuer at Step 414. Figure 4 illustrates the case where the issuer decision at Step 414 is to approve the AR message (FTI) 408.

Immediately after having approved the AR message (FTI) 408 at Step 424, the issuer 406 is able to post the transaction to the cardholder's account. Note that the issuer is able to post the transaction to the cardholder's account before receiving the CR message 420 in Step 422 because the issuer can see that it has received an AR message (FTI) 408 - as opposed to a normal AR message (non-FTI) - and because the switch 404 has previously guaranteed to the acquirer 402 that whenever the issuer 406 receives an AR message (FTI) 408 then the issuer will always, without exceptions, also receive a CR message 420 a few minutes or a few hours later where the amounts in that CR message 420 will exactly match those of the AR message (FTI) 408. By posting the transaction to the cardholder's account, the issuer 406 bills the cardholder for the purchase.

The ARR message (FTI) 416 may comprise a response indicator showing whether the authorisation request has been (i) fully-approved, (ii) partially-approved, or (iii) declined. In some configurations, the issuer 406 may only generate an ARR message (FTI) if the authorisation request has been fully approved. At Step 418 the ARR message (FTI) 416 is sent to the switch 404. At Step 417, the ARR message (FTI) 416 is sent onto the acquirer 102 and subsequently onto the merchant.

### Clearing

In a typical dual-message transaction (as described above with reference to Figure 1), after receiving any remaining necessary transaction data from the merchant the acquirer must generate a clearing request message and send the clearing request message to the switch in order to initiate the clearing process. However, in the present disclosure, once the ARR message (FTI) 416 is received by the switch 404 at Step 418, the switch 404 checks, at Step 413, whether the authorisation request has been fully-approved or partially-approved or declined. This check or analysis may be carried out by way of the response indicator in the ARR message (FTI) 416.

If the authorisation request has been fully-approved, the switch 404 automatically generates, at Step 419, a clearing request (CR) message 420 on behalf of the acquirer 402, wherein the CR message 420 comprises the transaction data and signifies that the transaction has been completed at the merchant point of service.

To summarise, in the event that the ARR message is flagged with an FTI and the issuer 406 fully-approves the authorisation request in the AR message (FTI), then the switch 404 (i) generates the CR message 420 on behalf of the acquirer 402, (ii) generates the CR message 420 such that the cardholder billing amount of the CR message matches that of the authorisation request in the AR message (FTI), and (iii) generates the CR message 420 within a pre-specified time frame. In some configurations, the switch 404 may generate the CR message on behalf of the acquirer for partially-approved authorisation requests.

After the CR message 420 has been generated at Step 419, the switch 404 sends the CR message 420 to the clearing system of the switch 404 for further processing. After Step 419, during the next available clearing cycle, at Step 421, the clearing system at the switch 404 clears the transaction, without further intervention from the acquirer 402. This includes validating the transaction data contained within the CR message 420 and performing other processing tasks typical of clearing. After the clearing system at switch has cleared the transaction data contained within the CR message 420, the switch 404 sends a CR confirmation message 422A to the acquirer 402 and a CR confirmation message 422B to the issuer 406, to inform both that the transaction cleared successfully. At Step 425, the acquirer 402 transfers funds to the merchant for the cardholder's purchase.

It should be understood that the switch may simultaneously send to the acquirer 402 multiple CR confirmation messages (as a batch of CR confirmation messages) that relate to AR messages (FTI) submitted to the switch by the acquirer for multiple issuers for multiple different transactions and that the switch may simultaneously send to the issuer 406 multiple CR confirmation messages (as a batch of CR confirmation messages) that relate to AR messages (FTI) submitted to the switch by multiple acquirers for multiple different transactions. However, for the purpose of clarity, in the present example the switch 404 sends a single CR confirmation message 422A to the acquirer 402 and a single CR confirmation message 422B to the issuer 406.

It should be noted that the switch 404 may run several clearing cycles per day. For the purpose of clarity, a single CR message 420 is sent to the clearing system. However, the switch may save up multiple CR messages to be processed in bulk.

The clearing system at the switch 404 validates the transaction data contained within the CR message 420. The switch 404 may also generate and attach additional information to the CR message 420. At Step 422, the switch 404 then sends the CR message 420 to the issuer 406. Advantageously, and as highlighted before, the transaction data contained within the CR message matches the transaction data contained within the AR message (FTI).

Further features of the processes described with reference to Figure 4 may comprise the following. Multiple ARR messages (FTI) may be generated by different issuers and processed simultaneously. In such cases, the ARR messages (FTI) may be checked periodically for fully-approved indicators before the clearing cycle begins.

If the switch 404 has already generated a CR message 420 at Step 419 in response to receiving the ARR message (FTI) 416, and the switch 404 subsequently receives an alternative CR message from the acquirer 402 for a transaction in which the AR message contained an FTI, then the switch 404 may reject the CR message received subsequently from the acquirer such that duplicate submission of the CR message to the issuer 406 can be avoided.

If the switch 404, at Step 418, receives an ARR message for an AR message which does not contain an FTI flag, then the switch 404 may send the ARR message onto the acquirer for the CR message to be generated by the acquirer, as described above for a typical dual-message transaction with reference to Figure 1. In such a case, the value of the data element associated with the FTI may be shown as "0" in the authorisation request message, rather than "1" as per the value of the data element within an AR message which does contain an FTI flag.

### Settlement

The settlement process of exchanging funds between the acquirer 402 and the issuer 406 for the transaction takes place in the same manner as in a typical dual-message transaction (as described above with reference to Figure 1). It is initiated by a settlement system at the switch 404. The settlement system generates an issuer settlement (IS) message 426 and an acquirer settlement (AS) message 428, for the issuer 406 and the acquirer 402 respectively, to communicate the total amount to be exchanged and to instruct the issuer and the acquirer to partake in the settlement of funds. At Step 430, the settlement system at the switch 404 sends the IS message 426 to the issuer 406, and at Step 432, the settlement system at the switch 404 sends the AS message 428 to the acquirer 402. Next, at Step 434, the issuer 406 settles payment to the settlement system at the switch 404. The settlement system then, at Step 436, routes the payment to the acquirer 402.

### FOUR-PARTY TRANSACTION MODEL

A typical four-party model used in payment interactions between entities operating in a card scheme is shown in Figure 5.

Normally, card schemes - payment networks linked to payment cards - are based on one of two models: a three-party model or a four-party model (adopted by Mastercard and others). For the purposes of the present disclosure, the four-party model is described in further detail below.

The four-party model may be used as a basis for the transaction network. For each transaction, the model comprises four entity types: cardholder 602, merchant 604, issuer 606 and acquirer 608. In this model, the cardholder 602 purchases goods or services from the merchant 604. The issuer 606 is the bank or any other financial institution that issued the card to the cardholder 602. The acquirer 608 provides services for card processing to the merchant 604.

The model further comprises a central switch 610, or card switching network, whereby interactions between the issuer 606 and the acquirer 608 are routed via the switch 610. The switch 610 enables a merchant 604 associated with one particular bank (acquirer 608) to accept payment transactions from a cardholder 602 associated with a different bank (issuer 606).

A typical transaction between the entities in the four-party model can be divided into three main stages: authorisation, clearing and settlement. The cardholder 602 initiates a purchase of goods or services from the merchant 604 using their card. Details of the card and the transaction are sent to the issuer 606 in an authorisation message via the acquirer 608 and the switch 610 in order to authorise the transaction. Should the transaction be considered abnormal by the issuer 606, the cardholder 602 may be required to undergo a verification process to verify their identity and the details of the transaction. Once the verification process is complete the transaction is authorised.

On completion of the transaction between the cardholder 602 and the merchant 604, the transaction details are submitted by the merchant 604 to the acquirer 608 for clearing and settlement. Clearing is the process by which merchants 604 and their acquirers 608 submit the definitive list of transactions performed as part of a clearing message. Settlement is the final transfer of funds between parties. Clearing and settlement processes are typically determined by the switch 610. A transaction such as that described above is often referred to as a 'dual-message' transaction since the clearing message is separate from the authorisation message.

Separately, the issuer 606 and the cardholder 602 settle the payment amount between them. A service fee is paid to the acquirer 608 by the merchant 604 for each transaction, and an interchange fee is paid to the issuer 606 by the acquirer 608 in return for the settlement of funds.

### ADVANTAGES

Advantageously, the present disclosure describes methods and systems which provide improved control of the clearing process in a dual-message transaction. Timing of the clearing process can be controlled more accurately. For example, the present disclosure enables an entity such as a card issuer to post a transaction to the cardholder's account immediately after approving the authorisation request. This provides cardholders with cardholder statements which are updated in real-time, which is something that cardholders increasingly expect and demand.

A further advantage of the present disclosure is that it enables card switching networks operating in dual-message topology to continue to support pre-authorised transactions in a flexible manner, while at the same time permitting card issuers improved control over posting final transactions on the cardholder's account, e.g. immediately after approving the authorisation request.

## Claims

1. A computer-implemented method for management of a transaction within a network, the network comprising a first entity, a transaction server and a second entity, wherein the transaction is taking place at the first entity and the management of the transaction comprises an authorisation phase in which the second entity determines if the transaction is to be approved, and a clearing phase in which, if the transaction has been approved, transaction data is exchanged between the first entity and the second entity, the method being implemented at the transaction server, the method comprising:
receiving (410) an authorisation request message from the first entity;
sending (412) the authorisation request message to the second entity;
receiving (418) an authorisation request response message from the second entity;
analysing (413) the received authorisation request response message to determine if the received authorisation request response message contains an approval indicator, the approval indicator indicating that the second entity approves the transaction; and
analysing the received authorisation request message to determine if the received authorisation request message contains a transaction indicator, the transaction indicator indicating that the first entity authorises the transaction to take place as a final transaction whereby the transaction is confirmed to take place and the transaction amount is known, and the transaction indicator further indicating that the clearing phase can be performed;
wherein in the event that the received authorisation request response message contains the approval indicator and the received authorisation request message contains the transaction indicator, the transaction server generates (419) on behalf of the first entity a clearing request message comprising transaction data matching the transaction data contained in the received authorisation request message and submits (421) the clearing request message to a clearing system of the transaction server on behalf of the first entity to enable the clearing phase to be performed.

2. A computer-implemented method according to Claim 1, wherein analysing (413) the received authorisation request response message further comprises determining if the received authorisation request response message contains the transaction indicator and wherein in the event that the received authorisation request response message contains the approval indicator and the transaction indicator, the transaction server generates and submits the clearing request message on behalf of the first entity to enable the clearing phase to be performed.

3. A computer-implemented method according to any preceding claim, the method further comprising:
adding transaction-related data to the authorisation request message to form an enhanced authorisation request message; and
sending the enhanced authorisation request message to the second entity.

4. A computer-implemented method according to Claim 3, wherein the transaction-related data comprises one or more of: interchange-related information, information about the clearing cycle in which the transaction will be cleared, and information about the settlement service which will be used to settle the transaction.

5. A computer-implemented method according to any preceding claim, the method further comprising:
generating the clearing request message within a pre-specified time frame.

6. A computer-implemented method according to any preceding claim, the method further comprising:
generating and adding additional information for use in generation of the clearing request message

7. A computer-implemented method according to Claim 6, wherein the additional information comprises the identification of the interchange rate to be applied when such information is not provided by the first entity.

8. A computer-implemented method according to Claim 1, wherein in the event the received authorisation request response message contains the approval indicator and no transaction indicator, the transaction server waits until a clearing request message is received from the first entity such that the clearing phase to be performed.

9. A computer-implemented method according to Claim 1, wherein the method further comprises:
monitoring an incoming clearing request message from the first entity; and
blocking the incoming clearing request message from the first entity in the event that the transaction server has already generated a clearing request message.

10. A transaction server (300) for management of a transaction within a network, the network comprising a first entity (302), the transaction server (300) and a second entity (304), wherein the transaction is taking place at the first entity (302) and the management of the transaction comprises an authorisation phase in which the second entity (304) determines if the transaction is to be approved, and a clearing phase in which, if the transaction has been approved, transaction data is exchanged between the first entity (302) and the second entity (304), the transaction server (300) comprising:
an input (306) arranged to receive an authorisation request message from the first entity (302) and an authorisation request response message from the second entity (304);
an output (308) arranged to send the authorisation request message to the second entity (304);
a processor (310) arranged to analyse the received authorisation request response message to determine if the received authorisation request response message contains an approval indicator, the approval indicator indicating that the second entity (304) approves the transaction;
wherein the processor (310) is arranged to analyse the received authorisation request message to determine if the received authorisation request message contains a transaction indicator, the transaction indicator providing an indication that the first entity authorises the transaction to take place as a final transaction whereby the transaction is confirmed to take place and the transaction amount is known, and the transaction indicator further indicating that the clearing phase can be performed
wherein in the event that the received authorisation request response message contains the approval indicator and the received authorisation request message contains the transaction indicator, the processor (310) is arranged to generate on behalf of the first entity a clearing request message comprising transaction data matching the transaction data contained in the received authorisation request message and to submit the clearing request message to a clearing system of the transaction server on behalf of the first entity to enable the clearing phase to be performed.

11. A computer program product comprising instructions which, when the program is executed by a computer, cause the computer to carry out the method of any of Claims 1 to 9.

12. A computer-readable storage medium comprising instructions which, when executed by a computer, cause the computer to carry out the method of any of Claims 1 to 9.

## Patentansprüche

1. Computerimplementiertes Verfahren zur Verwaltung einer Transaktion innerhalb eines Netzwerks, wobei das Netzwerk eine erste Entität, einen Transaktionsserver und eine zweite Entität umfasst, wobei die Transaktion bei der ersten Entität stattfindet und die Verwaltung der Transaktion eine Autorisierungsphase, in der die zweite Entität bestimmt, ob die Transaktion zu genehmigen ist, und eine Clearingphase umfasst, in der, wenn die Transaktion genehmigt wurde, Transaktionsdaten zwischen der ersten Entität und der zweiten Entität ausgetauscht werden, wobei das Verfahren auf dem Transaktionsserver implementiert ist, wobei das Verfahren Folgendes umfasst:
Empfangen (410) einer Autorisierungsanforderungsnachricht von der ersten Entität;
Senden (412) der Autorisierungsanforderungsnachricht an die zweite Entität;
Empfangen (418) einer Autorisierungsanforderungs-Antwortnachricht von der zweiten Entität;
Analysieren (413) der empfangenen Autorisierungsanforderungs-Antwortnachricht, um zu bestimmen, ob die empfangene Autorisierungsanforderungs-Antwortnachricht einen Genehmigungsindikator enthält, wobei der Genehmigungsindikator angibt, dass die zweite Entität die Transaktion genehmigt; und
Analysieren der empfangenen Autorisierungsanforderungsnachricht, um zu bestimmen, ob die empfangene Autorisierungsanforderungsnachricht einen Transaktionsindikator enthält, wobei der Transaktionsindikator angibt, dass die erste Entität die Durchführung der Transaktion als endgültige Transaktion autorisiert, wodurch die Durchführung der Transaktion bestätigt wird und der Transaktionsbetrag bekannt ist, und der Transaktionsindikator ferner angibt, dass die Clearingphase durchgeführt werden kann;
wobei für den Fall, dass die empfangene Autorisierungsanforderungs-Antwortnachricht den Genehmigungsindikator enthält und die empfangene Autorisierungsanforderungsnachricht den Transaktionsindikator enthält, der Transaktionsserver im Namen der ersten Entität eine Clearing-Anforderungsnachricht erzeugt (419), die Transaktionsdaten umfasst, welche mit den in der empfangenen Autorisierungsanforderungsnachricht enthaltenen Transaktionsdaten übereinstimmen, und die Clearing-Anforderungsnachricht im Namen der ersten Entität an ein Clearingsystem des Transaktionsservers übermittelt (421), um die Durchführung der Clearingphase zu ermöglichen.

2. Computerimplementiertes Verfahren nach Anspruch 1, wobei das Analysieren (413) der empfangenen Autorisierungsanforderungs-Antwortnachricht ferner das Bestimmen umfasst, ob die empfangene Autorisierungsanforderungs-Antwortnachricht den Transaktionsindikator enthält, und wobei für den Fall, dass die empfangene Autorisierungsanforderungs-Antwortnachricht den Genehmigungsindikator und den Transaktionsindikator enthält, der Transaktionsserver die Clearing-Anforderungsnachricht im Namen der ersten Entität erzeugt und übermittelt, um die Durchführung der Clearingphase zu ermöglichen.

3. Computerimplementiertes Verfahren nach einem der vorstehenden Ansprüche, wobei das Verfahren ferner umfasst:
Hinzufügen von transaktionsbezogenen Daten zu der Autorisierungsanforderungsnachricht, um eine erweiterte Autorisierungsanforderungsnachricht zu bilden; und
Senden der erweiterten Autorisierungsanforderungsnachricht an die zweite Entität.

4. Computerimplementiertes Verfahren nach Anspruch 3, wobei die transaktionsbezogenen Daten eines oder mehrere der folgenden Elemente umfassen: verrechnungsbezogene Informationen, Informationen über den Clearingzyklus, in dem das Clearing der Transaktion erfolgt, und Informationen über den Abwicklungsdienst, der für die Abwicklung der Transaktion verwendet wird.

5. Computerimplementiertes Verfahren nach einem der vorstehenden Ansprüche, wobei das Verfahren ferner umfasst:
Erzeugen der Clearing-Anforderungsnachricht innerhalb eines vorgegebenen Zeitrahmens.

6. Computerimplementiertes Verfahren nach einem der vorstehenden Ansprüche, wobei das Verfahren ferner umfasst:
Erzeugen und Hinzufügen zusätzlicher Informationen zur Verwendung bei der Erzeugung der Clearing-Anforderungsnachricht.

7. Computerimplementiertes Verfahren nach Anspruch 6, wobei die zusätzlichen Informationen die Identifizierung der anzuwendenden Verrechnungsgebühr umfassen, wenn solche Informationen nicht von der ersten Entität bereitgestellt werden.

8. Computerimplementiertes Verfahren nach Anspruch 1, wobei für den Fall, dass die empfangene Autorisierungsanforderungs-Antwortnachricht den Genehmigungsindikator und keinen Transaktionsindikator enthält, der Transaktionsserver wartet, bis eine Clearing-Anforderungsnachricht von der ersten Entität empfangen wird, so dass die Clearingphase durchgeführt werden kann.

9. Computerimplementiertes Verfahren nach Anspruch 1, wobei das Verfahren ferner umfasst:
Überwachen einer eingehenden Clearing-Anforderungsnachricht von der ersten Entität; und
Blockieren der eingehenden Clearing-Anforderungsnachricht von der ersten Entität, falls der Transaktionsserver bereits eine Clearing-Anforderungsnachricht erzeugt hat.

10. Transaktionsserver (300) zur Verwaltung einer Transaktion innerhalb eines Netzwerks, wobei das Netzwerk eine erste Entität (302), den Transaktionsserver (300) und eine zweite Entität (304) umfasst, wobei die Transaktion bei der ersten Entität (302) stattfindet und die Verwaltung der Transaktion eine Autorisierungsphase, in der die zweite Entität (304) bestimmt, ob die Transaktion zu genehmigen ist, und eine Clearingphase umfasst, in der, wenn die Transaktion genehmigt wurde, Transaktionsdaten zwischen der ersten Entität (302) und der zweiten Entität (304) ausgetauscht werden, wobei der Transaktionsserver (300) Folgendes umfasst:
einen Eingang (306), der dazu eingerichtet ist, eine Autorisierungsanforderungsnachricht von der ersten Entität (302) und eine Autorisierungsanforderungs-Antwortnachricht von der zweiten Entität (304) zu empfangen;
einen Ausgang (308), der dazu eingerichtet ist, die Autorisierungsanforderungsnachricht an die zweite Entität (304) zu senden;
einen Prozessor (310), der dazu eingerichtet ist, die empfangene Autorisierungsanforderungs-Antwortnachricht zu analysieren, um zu bestimmen, ob die empfangene Autorisierungsanforderungs-Antwortnachricht einen Genehmigungsindikator enthält, wobei der Genehmigungsindikator angibt, dass die zweite Entität (304) die Transaktion genehmigt;
wobei der Prozessor (310) dazu eingerichtet ist, die empfangene Autorisierungsanforderungsnachricht zu analysieren, um zu bestimmen, ob die empfangene Autorisierungsanforderungsnachricht einen Transaktionsindikator enthält, wobei der Transaktionsindikator eine Angabe bereitstellt, dass die erste Entität die Durchführung der Transaktion als endgültige Transaktion autorisiert, wodurch die Durchführung der Transaktion bestätigt wird und der Transaktionsbetrag bekannt ist, und der Transaktionsindikator ferner angibt, dass die Clearingphase durchgeführt werden kann;
wobei für den Fall, dass die empfangene Autorisierungsanforderungs-Antwortnachricht den Genehmigungsindikator enthält und die empfangene Autorisierungsanforderungsnachricht den Transaktionsindikator enthält, der Prozessor (310) dazu eingerichtet ist, im Namen der ersten Entität eine Clearing-Anforderungsnachricht zu erzeugen, die Transaktionsdaten umfasst, welche mit den in der empfangenen Autorisierungsanforderungsnachricht enthaltenen Transaktionsdaten übereinstimmen, und die Clearing-Anforderungsnachricht im Namen der ersten Entität an ein Clearingsystem des Transaktionsservers zu übermitteln, um die Durchführung der Clearingphase zu ermöglichen.

11. Computerprogrammprodukt umfassend Anweisungen, die, wenn das Programm von einem Computer ausgeführt wird, den Computer veranlassen, das Verfahren nach einem der Ansprüche 1 bis 9 durchzuführen.

12. Computerlesbares Speicherungsmedium umfassend Anweisungen, die, wenn sie von einem Computer ausgeführt werden, den Computer veranlassen, das Verfahren nach einem der Ansprüche 1 bis 9 durchzuführen.

## Revendications

1. Procédé mis en œuvre par ordinateur pour la gestion d'une transaction au sein d'un réseau, le réseau comprenant une première entité, un serveur de transaction et une deuxième entité, dans lequel la transaction se déroule au niveau de la première entité et la gestion de la transaction comprend une phase d'autorisation dans laquelle la deuxième entité détermine si la transaction doit être approuvée, et une phase de compensation dans laquelle, si la transaction a été approuvée, des données de transaction sont échangées entre la première entité et la deuxième entité, le procédé étant mis en œuvre au niveau du serveur de transaction, le procédé comprenant :
la réception (410) d'un message de demande d'autorisation à partir de la première entité ;
l'envoi (412) du message de demande d'autorisation à la deuxième entité ;
la réception (418) d'un message de réponse de demande d'autorisation à partir de la deuxième entité ;
l'analyse (413) du message de réponse de demande d'autorisation reçu pour déterminer si le message de réponse de demande d'autorisation reçu contient un indicateur d'approbation, l'indicateur d'approbation indiquant que la deuxième entité approuve la transaction ; et
l'analyse du message de demande d'autorisation reçu pour déterminer si le message de demande d'autorisation reçu contient un indicateur de transaction, l'indicateur de transaction indiquant que la première entité autorise le déroulement de la transaction en tant que transaction finale, moyennant quoi le déroulement de la transaction est confirmé et le montant de transaction est connu, et l'indicateur de transaction indiquant en outre que la phase de compensation peut être réalisée ;
dans lequel dans le cas où le message de réponse de demande d'autorisation reçu contient l'indicateur d'approbation et le message de demande d'autorisation reçu contient l'indicateur de transaction, le serveur de transaction génère (419) au nom de la première entité un message de demande de compensation comprenant des données de transaction concordant avec les données de transaction contenues dans le message de demande d'autorisation reçu et soumet (421) le message de demande de compensation à un système de compensation du serveur de transaction au nom de la première entité pour permettre la réalisation de la phase de compensation.

2. Procédé mis en œuvre par ordinateur selon la revendication 1, dans lequel l'analyse (413) du message de réponse de demande d'autorisation reçu comprend en outre la détermination du fait que le message de réponse de demande d'autorisation reçu contient ou non l'indicateur de transaction et dans lequel dans le cas où le message de réponse de demande d'autorisation reçu contient l'indicateur d'approbation et l'indicateur de transaction, le serveur de transaction génère et soumet le message de demande de compensation au nom de la première entité pour permettre la réalisation de la phase de compensation.

3. Procédé mis en œuvre par ordinateur selon l'une quelconque des revendications précédentes, le procédé comprenant en outre :
l'ajout de données relatives à la transaction au message de demande d'autorisation pour former un message de demande d'autorisation amélioré ; et
l'envoi du message de demande d'autorisation amélioré à la deuxième entité.

4. Procédé mis en œuvre par ordinateur selon la revendication 3, dans lequel les données relatives à la transaction comprennent au moins les unes parmi : des informations relatives à un interchange, des informations concernant le cycle de compensation dans lequel la transaction sera compensée, et des informations concernant le service de règlement qui sera utilisé pour régler la transaction.

5. Procédé mis en œuvre par ordinateur selon l'une quelconque des revendications précédentes, le procédé comprenant en outre :
la génération du message de demande de compensation dans un intervalle de temps spécifié au préalable.

6. Procédé mis en œuvre par ordinateur selon l'une quelconque des revendications précédentes, le procédé comprenant en outre :
la génération et l'ajout d'informations supplémentaires pour une utilisation dans la génération du message de demande de compensation.

7. Procédé mis en œuvre par ordinateur selon la revendication 6, dans lequel les informations supplémentaires comprennent l'identification du taux d'interchange à appliquer lorsque de telles informations ne sont pas fournies par la première entité.

8. Procédé mis en œuvre par ordinateur selon la revendication 1, dans lequel dans le cas où le message de réponse de demande d'autorisation reçu contient l'indicateur d'approbation et aucun indicateur de transaction, le serveur de transaction attend jusqu'à la réception d'un message de demande de compensation à partir de la première entité de sorte que la phase de compensation peut être réalisée.

9. Procédé mis en œuvre par ordinateur selon la revendication 1, dans lequel le procédé comprend en outre :
la surveillance d'un message de demande de compensation entrant à partir de la première entité ; et
le blocage du message de demande de compensation entrant à partir de la première entité dans le cas où le serveur de transaction a déjà généré un message de demande de compensation.

10. Serveur de transaction (300) pour la gestion d'une transaction au sein d'un réseau, le réseau comprenant une première entité (302), le serveur de transaction (300) et une deuxième entité (304), dans lequel la transaction se déroule au niveau de la première entité (302) et la gestion de la transaction comprend une phase d'autorisation dans laquelle la deuxième entité (304) détermine si la transaction doit être approuvée, et une phase de compensation dans laquelle, si la transaction a été approuvée, des données de transaction sont échangées entre la première entité (302) et la deuxième entité (304), le serveur de transaction (300) comprenant :
une entrée (306) agencée pour recevoir un message de demande d'autorisation à partir de la première entité (302) et un message de réponse de demande d'autorisation à partir de la deuxième entité (304) ;
une sortie (308) agencée pour envoyer le message de demande d'autorisation à la deuxième entité (304) ;
un processeur (310) agencé pour analyser le message de réponse de demande d'autorisation reçu pour déterminer si le message de réponse de demande d'autorisation reçu contient un indicateur d'approbation, l'indicateur d'approbation indiquant que la deuxième entité (304) approuve la transaction ;
dans lequel le processeur (310) est agencé pour analyser le message de demande d'autorisation reçu pour déterminer si le message de demande d'autorisation reçu contient un indicateur de transaction, l'indicateur de transaction fournissant une indication selon laquelle la première entité autorise le déroulement de la transaction en tant que transaction finale, moyennant quoi le déroulement de la transaction est confirmé et le montant de transaction est connu, et l'indicateur de transaction indiquant en outre que la phase de compensation peut être réalisée
dans lequel dans le cas où le message de réponse de demande d'autorisation reçu contient l'indicateur d'approbation et le message de demande d'autorisation reçu contient l'indicateur de transaction, le processeur (310) est agencé pour générer au nom de la première entité un message de demande de compensation comprenant des données de transaction concordant avec les données de transaction contenues dans le message de demande d'autorisation reçu et soumettre le message de demande de compensation à un système de compensation du serveur de transaction au nom de la première entité pour permettre la réalisation de la phase de compensation.

11. Produit-programme informatique comprenant des instructions qui, lorsque le programme est exécuté par un ordinateur, amènent l'ordinateur à effectuer le procédé de l'une quelconque des revendications 1 à 9.

12. Support de stockage lisible par ordinateur comprenant des instructions qui, lorsqu'elles sont exécutées par un ordinateur, amènent l'ordinateur à effectuer le procédé de l'une quelconque des revendications 1 à 9.
